# FASCICULE DE BREVET EUROPEEN

(11) **EP 2 591 457 B1**
(45) Date de publication et mention de la délivrance du brevet: **22.10.2014**
(21) Numéro de dépôt: 11743105.6
(22) Date de dépôt: 07.07.2011
(51) Int. Cl.: G06T 15/04, G06T 3/00

(54) **DISPOSITIF DE SYNTHÈSE D'IMAGE**
BILDZUSAMMENSETZUNGSVORRICHTUNG
IMAGE SYNTHESIS DEVICE

(30) Priorité: 09.07.2010 FR 1002902
(43) Date de publication de la demande: 15.05.2013
(73) Titulaire: INRIA - Institut National de Recherche en Informatique et en Automatique, 78153 Le Chesnay Cedex (FR)
(72) Inventeur: LEFEBVRE, Sylvain, F-42480 La Fouillouse (FR); HORNUS, Samuel, F-54000 Nancy (FR); LASRAM, Anass, F-54500 Vandoeuvre-les-Nancy (FR)
(74) Mandataire: Blot, Philippe Robert Emile
(86) Numéro de dépôt international: PCT/FR2011/051617
(87) Numéro de publication internationale: WO 2012/004537

(56) Documents cités:
- EP-A2- 1 026 630
- MATTHEW BRAND ED - MOHAMED KAMEL ET AL: "Image and Video Retargetting by Darting", 6 juillet 2009 (2009-07-06), IMAGE ANALYSIS AND RECOGNITION, SPRINGER BERLIN HEIDELBERG, BERLIN, HEIDELBERG, PAGE(S) 33 - 42, XP019122401, ISBN: 978-3-642-02610-2 le document en entier
- DONGFENG HAN ET AL: "Optimal multiple-seams search for image resizing with smoothness and shape prior", THE VISUAL COMPUTER ; INTERNATIONAL JOURNAL OF COMPUTER GRAPHICS, SPRINGER, BERLIN, DE, vol. 26, no. 6-8, 14 avril 2010 (2010-04-14), pages 749-759, XP019845852, ISSN: 1432-2315
- AVIDAN S ET AL: "Seam carving for content-aware image resizing", ACM TRANSACTIONS ON GRAPHICS, ACM, US, vol. 26, no. 3, 1 juillet 2007 (2007-07-01), pages 10-1, XP007904203, ISSN: 0730-0301, DOI: DOI:10.1145/1276377.1276390
- VAQUEROA ET AL: "A survey of image retargeting techniques", PROCEEDINGS OF SPIE, SPIE, USA, vol. 7798, 1 janvier 2010 (2010-01-01), pages 779814-1, XP009144529, ISSN: 0277-786X
- LEFEBVRE S ET AL: "By-example synthesis of architectural textures", ACM TRANSACTIONS ON GRAPHICS 2010 ASSOCIATION FOR COMPUTING MACHINERY USA, vol. 29, no. 4, 26 juillet 2010 (2010-07-26), XP002661153, DOI: DOI:10.1145/1778765.1778821

## Description

L'invention concerne la synthèse d'images.

Dans l'informatique moderne, les capacités de calcul ont augmenté de manière exponentielle, jusqu'à permettre maintenant l'immersion dans des univers en trois dimensions.

La gestion de ces univers et la recherche de les rendre toujours plus réalistes pour les utilisateurs sont néanmoins en conflit avec le temps nécessaire à la création de ces univers, ainsi qu'avec les limitations techniques notamment en termes de capacité et d'accès mémoire.

Pour gérer ce problème, des systèmes ont été conçus qui utilisent des stocks limités d'images qui sont manipulées pour donner une illusion de variété, par exemple en appliquant ces images sur les surfaces tridimensionnelles pour leur donner une apparence variée.

"Image and Video Retargetting by Darting", Matthew Brand et al., 6 juillet 2009, Image Analysis And Recognition, Springer Berlin Heidelberg pages 33-42, décrit une technique pour modifier une image en ajoutant ou retirant des pixels de manière imperceptible. "By example synthesis of architectural textures". Sylvain Lefebvre et al., 26 juillet 2010, ACM Transactions on graphics, décrit une approche de synthèse de textures.

Cependant, la qualité des images résultantes est insatisfaisante si les images sont réutilisées sur des surfaces variées. D'autre part, si l'on veut adapter chaque image à sa surface support pour améliorer la qualité, il est nécessaire de stocker individuellement toutes les images résultantes, ce qui est un gâchis manifeste d'espace de stockage.

L'invention vient améliorer la situation.

À cet effet, l'invention propose un dispositif de traitement d'image, qui comprend :
- un analyseur capable de calculer, à partir de données d'image, des données de coupure et des données de différence associées, les données de coupure comprenant des coordonnées de l'image et désignant une paire de chemins parallèles dans l'image, et les données de différence étant représentatives d'une différence entre des attributs des données d'image le long de chaque paire de chemins parallèles,
- un sélectionneur recevant en entrée des données d'un noeud de travail et des données de coupure, et agencé pour en tirer des données de noeuds dits successeurs sur la base d'une règle de sélection, les données d'un noeud comprenant des données de coupure, des données de coût, et des données de position,
- un assembleur recevant en entrée des données de noeuds de travail et des données d'un noeud prédécesseur, et capable de calculer des données de noeuds mis à jour, en fonction des données de coût de certains au moins des noeuds de travail, de celles du noeud prédécesseur, et des données de différence associées aux données de coupure des noeuds de travail,
- un pilote agencé pour :
   *appeler l'analyseur avec des données d'image d'une image en entrée,
   * appeler le sélectionneur avec un noeud d'entrée comme noeud de travail et avec les données de coupure calculées par l'analyseur,
   * appeler l'assembleur avec certains au moins des noeuds successeurs déterminés par le sélectionneur comme noeuds de travail, et avec le noeud d'entrée comme noeud prédécesseur, et
   * appeler répétitivement le sélectionneur et l'assembleur, en utilisant un des noeuds mis à jour comme noeud de travail pour le sélectionneur, en utilisant les noeuds successeurs résultants de cet appel comme noeuds de travail et le noeud mis à jour comme noeud prédécesseur pour l'assembleur, jusqu'à ce qu'une condition portant sur les données de coupure et les données de position d'un noeud mis à jour soit remplie.

Ce dispositif et ce procédé sont très intéressants car ils permettent de générer de nouvelles images similaires aux images de référence, mais dont les tailles sont adaptées à leur surface support.

Par exemple, si l'on applique une image de façade de trois étages sur une face d'un bâtiment de quatre étages on observera une distorsion. Grâce à l'invention, une nouvelle image de façade, ressemblant à l'originale mais ayant le bon nombre d'étages sera générée.

De plus, son stockage et son affichage se feront sous une forme très compacte. Au demeurant, l'invention ne se limite pas aux façades mais s'applique à toute image présentant suffisamment de répétitions selon des translations horizontales ou verticales.

D'autres caractéristiques et avantages de l'invention apparaîtront mieux à la lecture de la description qui suit, tirée d'exemples donnés à titre illustratif et non limitatif, tirés des dessins sur lesquels
- la figure 1 représente un diagramme schématique d'un dispositif selon l'invention,
- la figure 2 représente un diagramme schématique de synthèse d'une image avec le dispositif de la figure 1,
- la figure 3 représente un exemple d'opérations réalisées par le dispositif de la figure 1 selon la figure 2,
- la figure 4 représente un diagramme de flux de la mise en oeuvre d'une autre partie de la figure 2 par le dispositif de la figure 1,
- la figure 5 représente un exemple de coupures selon l'invention,
- la figure 6 représente une variante du diagramme de la figure 3, et
- la figure 7 représente une variante de la figure 1 dans laquelle le dispositif est utilisé pour créer un ensemble d'images pour simuler une ville en trois dimensions.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

La présente description est de nature à faire intervenir des éléments susceptibles de protection par le droit d'auteur et/ou le copyright. Le titulaire des droits n'a pas d'objection à la reproduction à l'identique par quiconque du présent document de brevet ou de sa description, telle qu'elle apparaît dans les dossiers officiels. Pour le reste, il réserve intégralement ses droits.

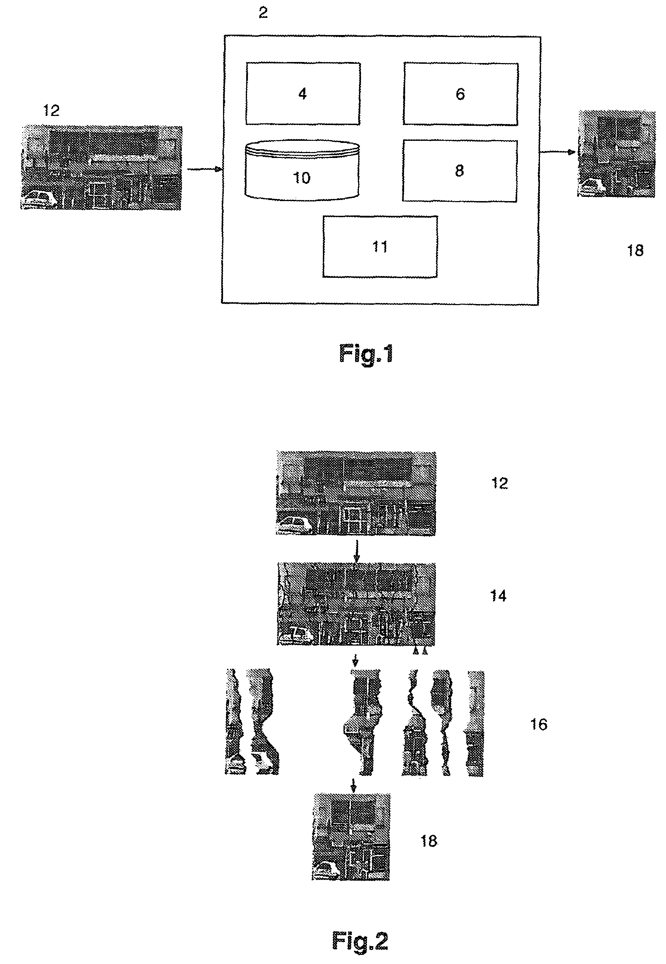

La figure 1 représente un diagramme schématique d'un dispositif 2 selon l'invention.

Dans l'exemple décrit ici, le dispositif 2 reçoit en entrée une image de taille MxN ainsi qu'une largeur cible W, et produit en sortie une image de taille WxN ressemblant à l'image d'entrée.

Le dispositif 2 comprend un analyseur 4, un sélectionneur 6, un assembleur 8, une base de règles 10, et un pilote 11 pour les commander.

Comme cela apparaît sur la figure 2, le dispositif 2 reçoit une image d'entrée 12. Dans une première opération, le dispositif 2 appelle l'analyseur 4 avec l'image d'entrée 12. À l'issue de cette opération, l'analyseur 4 produit un fichier qui comprend des données définissant un plan de découpe de l'image d'entrée.

Le plan de découpe comprend une liste de suites de coordonnées dans l'image, chaque suite définissant un chemin dans l'image d'entrée. Pour matérialiser ce plan de découpe, une image 14 est représentée sur laquelle les chemins du plan de découpe sont représentés en superposition sur l'image d'entrée 12.

Chaque ligne brisée a au moins une autre ligne brisée qui lui est parallèle: il est possible de les superposer exactement. Cette correspondance est enregistrée dans le fichier produit par l'analyseur 4.

Ces lignes brisées seront dans ce qui suit désignées par le terme "coupure", et dans l'exemple décrit ici, elles sont orientées verticalement par rapport à l'affichage de l'image: chaque coupure sépare l'image en deux parties gauche et droite.

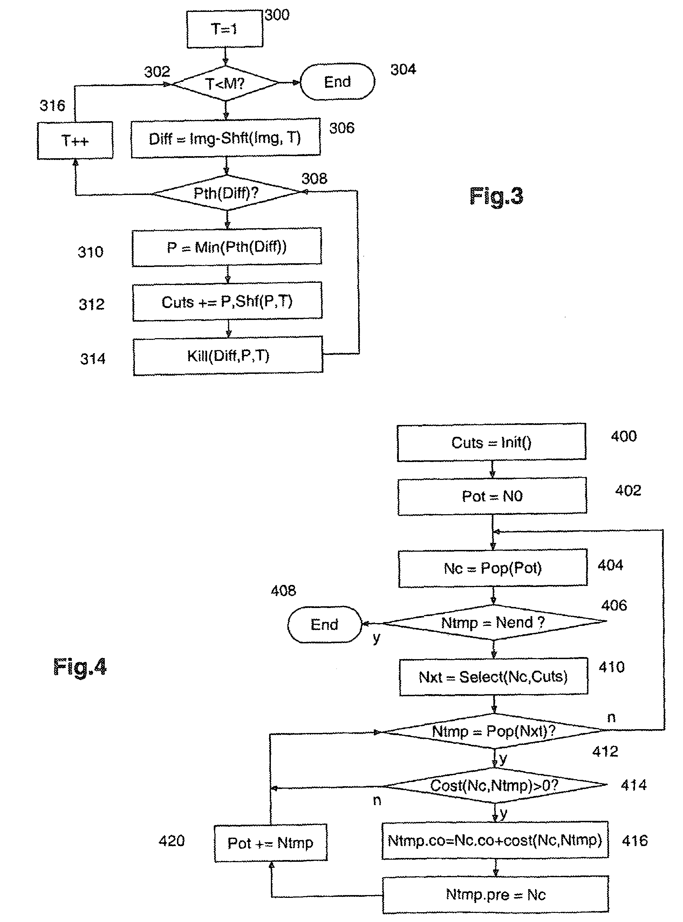

La figure 3 représente un exemple de mise en oeuvre de l'analyseur 4.

L'analyseur 4 recherche des paires de chemins entre le bord haut et le bord bas de l'image, telles que les deux chemins soient strictement parallèles et aient des couleurs similaires.

Les deux chemins recherchés étant parallèles, il est possible de les superposer exactement par une translation T. Ces chemins sont nommés *"coupures"* car il est possible de découper l'image le long de ces deux chemins afin d'en enlever un morceau, ou d'en répéter un morceau.

Le coût (ou qualité) du recollement, c'est-à-dire la possibilité pour un utilisateur de percevoir un défaut visuel, dépend de la similarité entre les couleurs le long de la paire de chemins.

Il existe un grand nombre de paires de coupures possible séparées de distances différentes et proposant des qualités de recollement variables.

Bien qu'il soit possible d'utiliser des coupures de formes quelconques, le Demandeur a choisi de restreindre la recherche des coupures à des chemins de forme simple, afin de simplifier leur stockage. En particulier, une coupure avance toujours strictement du haut vers le bas et ne peut se déplacer au plus que d'un pixel en abscisse à chaque pixel descendu en ordonnée.

La recherche des coupures est une étape importante : un nombre trop important de coupures alourdirait inutilement le traitement alors qu'un nombre trop faible de coupures empêcherait l'assembleur 8 de produire des images synthétisées de bonne qualité.

L'analyseur 4 de l'exemple décrit ici est un compromis entre l'obtention de coupures parallèles de bonne qualité (c'est-à-dire présentant une faible différence de couleurs) et l'obtention d'une bonne répartition de coupures dans l'image, afin que l'assembleur 8 ait suffisamment de choix.

L'analyseur 4 reçoit en entrée une image Img de taille MxN et produit en sortie une pluralité de coupures parallèles dans un fichier Cuts.

L'analyseur 4 met en oeuvre un algorithme qui exécute une boucle globale dont chaque itération exécute une pluralité de boucles locales. Pour cela, un indice de largeur T variant entre 1 et M-1, est initialisé dans une opération 300.

Dans une opération 302, il est vérifié si T vaut M-1, ce qui signifierait que toutes les largeurs possibles ont été testées. Si c'est le cas, alors l'algorithme se termine dans une opération 304.

Les opérations 306 à 316 décrivent l'exécution d'une itération de la boucle globale. Chaque itération de la boucle globale trouve, pour chaque largeur T possible, un ensemble de coupures parallèles qui ne se croisent pas pour cette largeur. On notera cependant que des coupures associées à deux largeurs différentes, et donc déterminées dans des itérations distinctes de la boucle globale, peuvent se croiser.

Le principe de découverte d'une paire de coupures parallèles est d'utiliser une carte de différence Diff, et de trouver dans cette carte un chemin unique. Pour cela la carte Diff est calculée dans l'opération 306 comme la différence de couleur entre les pixels de l'image Img et ceux de sa translation de T pixels vers la droite. En variante, d'autres attributs des données de l'image pourraient être retenus, comme la chrominance, ou la luminosité, ou encore la saturation.

Un chemin dans la carte Diff correspond donc à deux chemins dans l'image Img :
- un premier chemin qui a les mêmes coordonnées que le chemin de Diff, et
- un deuxième chemin, décalé de T pixels vers la gauche dans l'image Img.

Ces deux chemins sont parallèles par construction. La correspondance de couleur entre ces chemins correspond à la somme des valeurs de couleur des pixels le long du chemin dans la carte Diff. Cette somme correspond concrètement à la somme des différences entre les pixels de long du chemin, c'est à dire le coût du chemin.

Chaque boucle locale est formée par les opérations 308 à 314, et vient choisir un chemin P dans la carte Diff, et stocker les coupures correspondantes dans le fichier Cuts.

Pour savoir s'il reste des coupures à trouver pour la largeur T courante, une fonction Pth() est appelée dans l'opération 308. Cette fonction va chercher dans la carte Diff tous les chemins possibles selon la règle décrite plus haut, c'est-à-dire toujours strictement du haut vers le bas et sans déplacement de plus d'un pixel en abscisse à chaque pixel descendu en ordonnée, et ne retient que les chemins qui n'ont pas un coût dit infini. La notion de coût infini sera clarifiée plus bas.

Si la fonction Pth() ne trouve aucun chemin, alors la boucle globale a terminé son itération courante, et l'indice T est incrémenté dans une opération 316, puis la boucle globale reprend en 302.

Sinon, dans l'opération 310, la fonction Min() renvoie le chemin P de la carte Diff qui a le coût le plus faible. Ensuite, dans une opération 314, les coupures correspondant au chemin P sont stockées dans le fichier Cuts, avec le coût associé au chemin P.

Enfin, dans l'opération 316, une fonction Kill() vient modifier tous les pixels de la carte Diff compris entre le chemin P et le chemin P décalé de T pixels à droite et à gauche pour donner une valeur indiquant un coût infini. Cette valeur peut être choisie arbitrairement ou être un signe particulier.

Le rôle de la fonction Kill() est de garantir que toutes les boucles locales ultérieures à la boucle locale courante produiront des coupures non sécantes à celles déterminées précédemment. Et comme dans le pire des cas, le chemin P fait T pixels de large, on élimine des boucles locales suivantes, les T pixels suivant P en leur affectant un coût infini.

Cela permet de ne pas accumuler inutilement trop de coupures parallèles dans une même région de l'image. L'opération 310 garantit que seule la meilleure paire de coupures possible est retenue pour la largeur T, c'est-à-dire celle qui a le plus petit coût. L'algorithme trouve donc un bon compromis entre les objectifs de qualité et de quantité des coupures.

Comme on l'a vu plus haut, le coût correspond à la somme des différences entre les couleurs de pixels associés aux deux chemins parallèles (plus généralement à la différence d'attribut d'image si un autre attribut que la couleur est retenu). Deux coupures non parallèles ne sont pas superposables, et donc pas comparables.

De plus, comme on le verra dans la suite, le fait d'associer deux coupures non parallèles n'induit pas de différence visuelle. Pour cette raison, le coût associant deux coupures non parallèles est défini comme nul.

Dans l'exemple décrit ici, il n'existe de données de coût que pour les coupures parallèles, et toutes les autres associations de coupure ont un coût nul implicite. En variante, cela pourrait être explicite.

On suppose que les coupures parallèles ne sont jamais de coût nul (i.e. il n'existe pas de correspondance parfaite). Ceci peut être garanti en ajoutant une faible valeur non nulle au coût de correspondance de toutes les paires de coupures parallèles. En pratique ce cas est très rare, sauf sur des images artificielles. D'autres stratégies sont possibles pour éviter ce problème.

Par coupure sécante, on entend ici le fait qu'il existe une portion de l'image originale dans laquelle l'abscisse de la première coupure est inférieure à celle de la deuxième coupure, et une autre portion de cette image dans laquelle l'abscisse de la deuxième coupure est inférieure à celle de la première coupure. En d'autres termes, lorsque l'on regarde les "chemins" associés à ces coupures, ils se coupent.

Pour une coupure donnée, il existe un jeu de coupures qui est particulièrement intéressant. Ce jeu comprend des coupures dites *"frontales".* Une coupure est dite frontale par rapport à une coupure donnée si la coupure frontale est entièrement située à droite de la coupure donnée et s'il n'existe aucune autre coupure qui est intégralement située entre elle et la coupure donnée. Par intégralement située entre, on entend qu'il n'existe pas de coupures dont tous les points sont strictement situés entre ceux de la coupure donnée et ceux de la coupure frontale.

Plusieurs coupures sécantes entre elles peuvent être frontales par rapport à une coupure donnée. Comme on le verra plus bas, cette sélection de coupures frontales est importante pour trouver plus efficacement la solution. En effet, elles vont permettre de réduire le nombre de possibilités examinées, tandis que leur définition garantit qu'aucune solution possible n'est écartée.

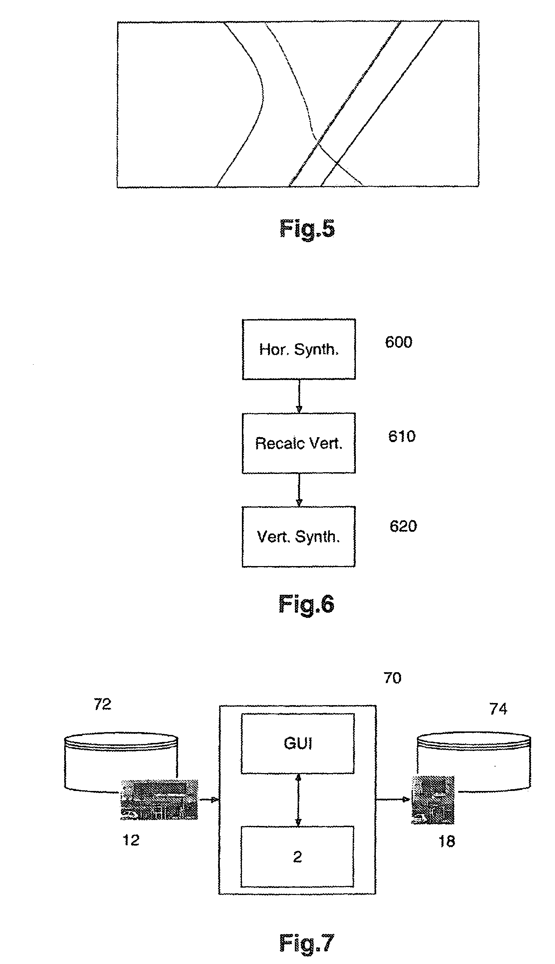

La figure 5 permet de mieux comprendre la notion de coupure frontale. Comme on peut le voir sur cette figure, la coupure donnée est la coupure la plus à gauche.

Sur cette figure, les deux coupures qui ont l'abscisse sur le bord haut la plus proche de celui de la coupure donnée sont des coupures frontales, et pas la troisième. En effet, pour chacune d'entre elles, il n'existe pas de coupure entre elles et la coupure donnée.

Par contre la dernière coupure (la plus à droite) n'est pas frontale par rapport à la coupure donnée car la coupure frontale ayant l'abscisse sur le bord haut le plus à droite est intégralement contenue entre la coupure donnée et cette coupure.

En variante, il serait possible de chercher des chemins par trois ou par quatre au lieu de les chercher par paire. En outre, comme on vient de le voir avec la description des figures 3 et 5, on peut parler de manière équivalente de chemin ou de coupure une fois qu'un chemin a été sélectionné dans une boucle locale. Ainsi, une coupure frontale peut également être appelée chemin frontal.

Une fois que l'analyseur 4 a calculé les coupures dans l'image d'entrée 12, une boucle est lancée dans laquelle le sélectionneur 6, l'assembleur 8 et la base de règles 10 interagissent pour produire un jeu 16 de morceaux d'image synthétisée.

Enfin, le jeu 16 de morceaux d'image synthétisée peut être assemblé pour former une image synthétisée 18.

La figure 4 représente un exemple de mise en oeuvre de la boucle qui produit le jeu 16. Dans ce premier mode de réalisation, l'image synthétisée est agrandie ou réduite selon la dimension horizontale.
Le concept de fonctionnement mis en oeuvre par cette boucle va maintenant être décrit.

Afin de simplifier la génération des images, et pour pouvoir les stocker à moindre coût, le Demandeur a pris le parti d'utiliser les avantages liés aux coupures. Comme on vient de le voir, une coupure est un chemin dans l'image selon une direction, ici entre les bords haut et bas de l'image, qui possède au moins un "chemin parallèle" ayant tout du long des couleurs similaires dans cette image.

Ainsi, si l'on colle à la suite d'une coupure donnée la partie de l'image originale qui suit la "coupure parallèle", l'oeil humain ne verra pas la différence dans la plupart des cas. Il devient alors possible d'agrandir ou de réduire la taille d'une image de base en réduisant très fortement les artefacts, tout en ajoutant de la variété.

Cela est fait par la juxtaposition d'une suite de coupures de l'image originale, qui sont remplies entre elles par le contenu correspondant de l'image originale. Cela apparaît par exemple avec le jeu 16.

Cette mise en oeuvre est très avantageuse, car il devient possible de créer une multitude d'images synthétisées à partir d'une seule image de base, et de les décrire uniquement avec cette image, les coupures qu'elle contient, et une pluralité de liste de coupures successives pour chaque image.

Le travail de reconstruction d'une image synthétisée à partir de sa liste de coupures est en effet très peu gourmand en temps de calcul. Il faut néanmoins faire le choix des coupures de manière judicieuse. De plus, dans la modélisation d'un immeuble en trois dimensions, il faut que les angles se correspondent, ce qui impose de garder les bords gauche et droit de l'image originale. Dans d'autres applications, cette limitation pourra être ignorée, et les bords de départ et d'arrivée pourront être choisis dans l'image par l'utilisateur.

Le travail du Demandeur l'a donc amené à étudier la manière la plus efficace de choisir la liste de coupures successives dans l'image afin d'obtenir une image finale de la taille choisie.

Comme cela apparaîtra avec la description qui suit de la boucle de génération du jeu 16, le Demandeur a mis en oeuvre une version adaptée de l'algorithme de Dijkstra. Ici, le but est de partir du bord gauche de l'image, et d'arriver au bord droit de l'image, en choisissant les coupures entre les deux pour obtenir la longueur voulue pour l'image synthétisée.

Pour cela, le sélectionneur 6 choisit à chaque itération la liste des coupures qui peuvent être utilisées parmi la liste suivante :
- la ou les coupures "parallèles" à la coupure en cours,
- l'ensemble des coupures dites "frontales".

Ces conditions de sélection forment une première règle de sélection qui est stockée dans la base de règles 10. D'autres règles seront décrites plus bas.

On notera que la sélection de la ou des coupures "parallèles" à la coupure en cours permet de "revenir en arrière" ou de "sauter en avant" dans l'image originale pour former l'image synthétisée, ce qui permet la génération d'images synthétisées agrandies ou réduites avec le moins d'artefact visuel possible.

De plus, ce jeu est réduit, ce qui simplifie la complexité de l'algorithme, tout en n'ignorant aucune combinaison possible, grâce aux coupures frontales notamment.

L'algorithme de Dijkstra est mis en oeuvre comme suit :
- lorsque la ou l'une des coupures "parallèles" à la coupure en cours est choisie, le coût est augmenté de la différence entre ces coupures, et la longueur de l'image synthétisée n'est pas augmentée. Par distance entre les coupures, on entend l'erreur, la différence entre les pixels de l'image originale le long des coupures. Cette information est directement disponible à partir du travail de l'analyseur 4.
- lorsque c'est une coupure frontale qui est choisie, le coût n'est pas augmenté, car cela revient à reproduire une partie de l'image originale, et la longueur de l'image synthétisée est augmentée de la longueur qui sépare la coupure courante de la coupure frontale choisie.
- l'algorithme s'arrête lorsque le bord droit de l'image est choisi, et que la longueur de l'image synthétisée est égale à la longueur voulue. Il ne reste qu'à remonter la liste des "précédents" établie par l'algorithme pour connaître la liste des coupures, jusqu'au bord gauche.

Cependant, l'algorithme fonctionne non pas sur la base des coupures, mais sur la base de noeuds. Par noeud on entend ici le couple formé par un identifiant de coupure et une position de cette coupure dans l'image synthétisée.

Comme on le verra plus bas, un noeud courant a plusieurs attributs :
- le prédécesseur de ce noeud, c'est-à-dire le noeud qui est considéré comme le moins coûteux pour atteindre le noeud courant,
- le coût qui est associé à ce noeud, c'est-à-dire la somme des différences entre toutes les coupures rencontrées avant d'atteindre ce noeud.

La boucle commence dans une opération 400 par l'appel d'une fonction Init() par le pilote 11.

La fonction Init() a pour rôle de réaliser les initialisations des variables et des paramètres globaux de la boucle de synthèse de l'image.

Parmi ces paramètres, on compte la longueur W souhaitée pour l'image synthétisée.

Comme on le verra avec la figure 6, cette longueur peut être spécifiée par l'utilisateur pour chaque image qu'il souhaite synthétiser. Elle peut également être générée automatiquement en fonction d'autres paramètres spécifiés par l'utilisateur et/ou de modèles de répartition.

Un autre paramètre est le fichier Cuts, qui reçoit l'ensemble des coupures identifiées dans l'image 12 par l'analyseur 4, et qui sert de point de départ à l'algorithme. Dans le fichier Cuts, les coupures sont décrites par la liste des coordonnées des points qui les définissent, et les coupures sont ordonnées par abscisses croissantes, c'est-à-dire que le bord gauche de l'image est la première coupure, puis suit la coupure qui contient le point dont l'abscisse est la plus basse, et ainsi de suite.

Dans une opération 402, la coupure qui correspond au bord gauche de l'image est choisie comme point de départ. Le noeud correspondant est ici noté N0 et a une abscisse nulle dans l'image synthétisée, un coût associé nul, et aucun prédécesseur. Le noeud N0 est stocké dans une liste Pot.

Une fois que cela est fait, l'initialisation de la boucle est terminée, et la boucle en tant que telle va s'exécuter.

Dans une première opération 404, la liste Pot est dépilée au moyen d'une fonction Pop(). Comme on le verra dans ce qui suit, il s'agit toujours du noeud ayant le coût le plus faible. Le résultat de ce dépilement est stocké dans un noeud courant Nc, et ce noeud est entré dans une liste de noeuds déjà optimisés.

Ensuite, dans une opération 406, un test vérifie si l'algorithme est terminé, c'est-à-dire si la coupure du noeud Nc est le bord droit de l'image, et si la longueur de l'image est la longueur souhaitée.

Si c'est le cas, la boucle se termine en 408. Sinon, dans une opération 410, le pilote appelle la fonction Select() avec le noeud courant Nc. Le résultat de cet appel est stocké dans une liste Nxt.

Dans la fonction Select(), le sélectionneur 6 sélectionne la liste des coupures du fichier Cuts qui correspondent à la coupure du noeud courant Nc selon les critères de sélection explicités plus haut. Ensuite, ces coupures sont arrangées sous forme de noeuds dans la liste Nxt, en fonction de la longueur associée à chaque coupure.
Ainsi, si la position de la coupure du noeud courant Nc est p, et que I est la longueur de la transition de la coupure du noeud courant Nc vers une coupure c tirée du fichier Cuts, alors un noeud est créé dans la liste Nxt qui a comme coupure la coupure c, et comme position une position q = p+1.

Dans le cas où un tel noeud a déjà été rencontré et est dans la liste Pot, alors les attributs de ce noeud sont copiés depuis la liste Pot, c'est-à-dire son noeud prédécesseur et le coût de ce noeuds. Sinon, ce noeud est nouveau, et le prédécesseur n'est pas initialisé, tandis que le coût associé à ce noeud est initialisé avec une valeur "infinie". Par valeur infinie, on entend soit des données indiquant que le coût n'a jamais été calculé, doit des données correspondant à un très grand coût.

La fonction Select() est prévue pour arranger la liste Nxt de manière ordonnée par coûts de transition croissants. Par coût de transition, on entend ici le coût associé à la diférence entre la coupure du noeud Nc et la coupure de chaque noeud de la liste Nxt. En variante, la fonction Select() peut effectuer un tri selon un autre attribut.

Ensuite, le pilote 11 appelle l'assembleur 8 dans une suite d'opérations 412 à 420 pour la mise à jour des attributs de coût des noeuds selon l'algorithme de Dijkstra.

Cette suite d'opérations est une boucle qui commence en 412 par le dépilage de la liste Nxt dans un noeud Ntmp. Si le noeud Ntmp est dans la liste des noeuds déjà optimisés, alors ce noeud est ignoré et l'opération 410 est répétée, car le coût de ce noeud ne peut pas être amélioré.

Lorsque Ntmp existe, un test 414 vérifie au moyen d'une fonction Cost() si le coût du noeud Ntmp peut être diminué. Pour cela, la fonction Cost() compare le coût du noeud Ntmp et le coût du noeud courant Nc ajouté du coût de transition de la coupure du noeud courant Nc à la coupure du noeud Ntmp.

Si le coût du noeud Ntmp est plus important, alors cela indique qu'il est possible d'atteindre ce noeud de manière plus économe en passant par le noeud courant Nc.
Alors, le coût du noeud Ntmp est mis à jour dans une opération 416 en ajoutant au coût associé au noeud courant Nc le coût de transition de la coupure du noeud courant Nc vers la coupure du noeud Ntmp. Comme on l'a vu plus haut, ce coût de passage est nul lorsque la coupure du noeud Ntmp n'est pas une coupure parallèle. Ensuite, dans une opération 418, le noeud courant Nc est indiqué comme prédécesseur du noeud Ntmp.

Ensuite, la liste Nxt est à nouveau dépilée dans l'opération 412. Avant cela, le noeud Ntmp est reversé dans la liste Pot dans une opération 420. Cette opération est réalisée de manière ordonnée, c'est-à-dire que le noeud Ntmp est introduit dans la liste Pot en fonction du coût qui lui est associé. Dans le cas où le noeud Ntmp est déjà dans la liste Pot, ses attributs de coût et de prédécesseur sont mis à jour et la liste Pot est triée en conséquence.

Lorsque, l'opération 412 détermine que la liste Nxt est vide, la boucle est réitérée en 404 avec un nouveau dépilage de la liste Pot.

Dans ce qui précède, il apparaît que chaque noeud de la liste Pot associé à ses prédécesseurs représente une variante d'image partiellement synthétisée possible. L'algorithme est optimisé pour s'arrêter dès que l'image synthétisée la plus fidèle, c'est-à-dire avec le coût le plus faible, et de bonne longueur est trouvée. Par bonne longueur, on entend que la position du dernier noeud est égale à la longueur voulue pour l'image synthétisée, et que la coupure de ce noeud est le bord droit.

L'algorithme exposé avec la figure 4 est donc très performant et permet de produire avec un faible coût de calcul une représentation qui a elle-même un poids faible d'une image synthétisée avec très peu d'artefacts.

Cependant, cet algorithme est perfectible. En effet, en fonction de la distribution des coûts associés aux coupures parallèles et de part le fait qu'un plus court chemin est toujours composé lui-même de plus courts chemins, il peut arriver que l'image synthétisée comporte une forte répétition d'un motif particulier de l'image originale.

Pour prévenir ce problème, la fonction Select() peut être modifiée pour mettre en oeuvre une pluralité de règles de sélection en plus de la première règle mentionnée plus haut.

La première règle décrite plus haut peut être variée en permettant de choisir comme coupures non parallèles les coupures situées à gauche de la coupure courante, c'est-à-dire en permettant de revenir en arrière avec toutes les coupures, et pas seulement les coupures parallèles. Dans ce cas le morceau d'image copié est inversé car copié de la droite vers la gauche.

Une deuxième règle peut être basée sur la limitation du nombre de répétitions d'une colonne de l'image d'entrée 12 dans toute portion de l'image synthétisée d'une certaine longueur. Ainsi, il est possible d'assurer que l'image synthétisée ne contient pas de répétitions désagréables à l'oeil.

Il faut pour cela maintenir un tableau d'occurrences pour chaque colonne de l'image d'entrée. Ce tableau est mis à jour dans l'opération 404 à partir des prédécesseurs du noeud Nc. Ce tableau contient le nombre d'occurrences des colonnes de l'image originale dans la portion de l'image partiellement synthétisée précédent Nc et de longueur choisie.

Lors de la sélection des noeuds dans l'opération 406, si la coupure d'un noeud donné candidat pour l'ajout dans la liste Nxt est une coupure frontale, alors un morceau de l'image originale sera ajouté à l'image synthétisée en cours. Le tableau d'occurrences est alors consulté pour vérifier que l'augmentation du nombre d'occurrences dû à cette copie ne dépassera pas un certain seuil. Si le seuil est dépassé, le noeud n'est pas ajouté dans la liste Nxt.

Une troisième règle opère de manière similaire mais en tenant compte de l'image synthétisée entière, au lieu d'une longueur choisie.

Les colonnes utilisées dans ses règles ont dans l'exemple décrit ici chacune une largeur de 1 pixel. Dans d'autres variantes, cette largeur peut être plus importante, voire varier.
Une quatrième règle peut imposer de la variété entre images synthétisées successivement. Pour cela, le sélectionneur 6 reçoit ou a accès à une liste d'images synthétisées décrites par leurs coupures, et ainsi donc à la position de chacune des colonnes de l'image originale dans chaque image déjà synthétisée.

La quatrième règle peut être de ne pas permettre de sélectionner comme noeud suivant les noeuds dont l'inclusion entraînerait la copie dans l'image synthétisée de colonnes de l'image originale à une position qui est proche de ce qui a déjà été réalisé dans les images déjà synthétisées.

Cela peut être réalisé en parcourant la liste Nxt produite par l'application de la première règle en combinaison ou pas avec la deuxième ou la troisième règle, et en retirant les noeuds qui ne satisfont pas cette quatrième règle.

De plus, pour l'application des deuxième, troisième, et quatrième règles, les calculs de tableau d'occurrences réalisés pour une image synthétisée donnée peuvent être réutilisés pour une image synthétisée ultérieure, comme l'algorithme est le même pour toutes les images synthétisées. Cela permet d'éviter de répéter de nombreux calculs.

Une cinquième règle peut imposer la reproduction d'une partie de l'image originale à un endroit précis de l'image synthétisée, par exemple par une interface de copier-coller. La zone à reproduire à l'identique a donc des coordonnées connues dans l'image synthétisée.

Pour appliquer cette règle, l'opération 406 doit gérer deux situations :
a. un noeud ajouté dans la liste Nxt a une coupure qui définit avec la coupure du noeud courant une zone de l'image originale qui est située avant la zone à reproduire à l'identique dans l'image synthétisée, ou lorsque le noeud courant a une position située après la zone à reproduire à l'identique dans l'image synthétisée,
b. un noeud ajouté dans la liste Nxt a une coupure qui définit avec la coupure du noeud courant une zone de l'image originale qui traverse la zone à reproduire à l'identique dans l'image synthétisée.
Les cas a. et b. peuvent être détectés en comparant les coordonnées dans l'image synthétisée des points associés à la coupure du noeud ajouté et celles de la zone à reproduire à l'identique.

Dans le cas a, l'opération 406 est inchangée.

Dans le cas b. le sélectionneur doit déterminer si la coupure du noeud ajouté reproduit la zone à reproduire à l'identique aux bonnes coordonnées. Si c'est le cas, alors ce noeud est gardé. Sinon, le noeud ajouté est retiré de la liste Nxt. Dans le cas où le noeud ajouté est gardé, le choix du noeud suivant est très contraint, car sa coupure doit reproduire le reste (totalement ou en partie) de la zone à reproduire à l'identique en partant de cette coupure.

Une sixième règle consiste à encourager les colonnes à apparaître avec des décalages qui suivent la fonction d'autocorrélation unidimensionnelle de l'image originale.
La fonction d'auto-corrélation mesure la distance de l'image avec sa copie décalée de x pixels, pour tout x.
Pour ce faire, on modifie le coût de transition entre deux coupures en lui ajoutant un coût supplémentaire variant comme l'inverse de la valeur de corrélation pour un x égal au décalage (modulo W) entre la position de la coupure courante dans l'image originale et sa position dans l'image en cours de synthèse, le tout multiplié par l'écart entre les deux coupures par rapport auxquelles on considère le coût de transition.

D'une manière générale, le fait que les plus courts chemins sont eux-mêmes composés de plus courts chemins de taille inférieure permet, dans le cas où les règles appliquées ne dépendent pas des opérations précédentes, de réaliser des gains importants sur les calculs.

En effet, si on calcule la solution pour une taille W, alors les calculs effectués peuvent être réutilisés intégralement, et il est possible d'obtenir la solution pour une taille W+X plus rapidement.

Compte tenu de l'état de l'art, il apparaît à l'homme du métier que l'algorithme décrit précédemment est un algorithme de plus court chemin (Dijkstra) appliqué sur un graphe. Bien que le graphe ne soit pas explicitement construit, il est implicitement défini par les règles de sélection des noeuds suivants.

Tout autre algorithme de plus court chemin, y compris des algorithmes approximatifs type A* ou aléatoires, pourront donc être employés de manière équivalente.

De même, le graphe correspondant aux règles décrites ci-avant pourrait être construit en mémoire explicitement, afin d'y effectuer divers traitements. Définir le graphe implicitement tel que décrit ci-avant permet néanmoins une exécution plus efficace de la synthèse d'une nouvelle image.

L'exemple qui vient d'être décrit l'a été en rapport avec une synthèse selon la direction horizontale d'une image. Mais une synthèse selon la direction verticale sera identique, à cela près que les coupures seront cette fois horizontales. Une autre possibilité serait d'imposer une rotation de 90° à l'image, et de lui appliquer un redimensionnement identique.

Lorsque l'on souhaite réaliser un redimensionnement bidimensionnel d'une image, il est possible de :
- calculer les coupures verticales,
- faire une synthèse horizontale pour obtenir une image intermédiaire,
- calculer les coupures horizontales dans l'image intermédiaire,
- faire une synthèse verticale pour obtenir l'image finale.

Cependant, cela impose de recalculer pour chaque image intermédiaire les coupures horizontales. Or cela est pénalisant, car ces coupes vont varier en fonction du redimensionnement horizontal qui a été effectué en premier lieu. Le résultat prend donc plus de temps à générer.

Le Demandeur a donc établi un algorithme représenté sur la figure 6, qui permet de réaliser une pluralité d'images synthétisées avec un agrandissement ou un rétrécissement bidirectionnel distinct, tout en ne conservant qu'un seul jeu de coupures horizontales et verticales qui est celui de l'image originale.

Dans l'exemple décrit ici, l'invention reçoit en entrée une image de taille MxN, une largeur cible W et produit en sortie une image de taille WxN ressemblant à l'entrée.

L'invention procède en deux temps: étant donné une taille cible de WxH pixels et une image originale de taille MxN, l'invention produit tout d'abord une image intermédiaire

de taille WxN à partir de l'image MxN, puis dans un second temps une image de taille WxH à partir de l'image intermédiaire de taille WxN.

Il convient de noter que l'ordre des opérations importe peu et que les opérations effectuées horizontalement et verticalement sont strictement équivalentes. La suite de cet exemple se limite au cas horizontal suivi de vertical.

Pour cela, une opération de synthèse horizontale est réalisée dans une opération 600. Cette opération est identique à l'ensemble de la figure 4. Le résultat est une liste de coupures verticales.

Ensuite, dans une opération 610, le pilote 11 appelle l'assembleur 8 pour appliquer à chaque coupure horizontale de l'image originale une transformation qui correspond à la liste de coupures verticales issues de l'opération 600.

Enfin, dans une opération 620, le pilote 11 réalise une opération de synthèse verticale, qui est basée sur les coupures horizontales transformées issues de l'opération 610.

Il en résulte une liste de coupures horizontales qui est stockée avec la liste de coupures verticales pour former l'image synthétisée.

Ainsi, pour reconstituer l'image synthétisée, il suffit d'appliquer la synthèse horizontale définie par la liste de coupures verticales à l'image originale et aux coupures horizontales, puis d'appliquer la synthèse verticale définie par les coupures horizontales résultantes à l'image résultante.

La figure 7 représente un système de synthèse d'univers dans lequel un serveur 70 comprend une interface utilisateur GUI et un dispositif 2 tel que décrit précédemment.

Ce serveur peut être réalisé sous la forme d'un circuit intégré spécialisé, ou d'un ordinateur exécutant un code qui exécute toutes les fonctions et présente toutes les caractéristiques du dispositif 2.

Au moyen de l'interface GUI, un utilisateur a la possibilité de générer des images synthétisées variées de manière massive, par lot.

Pour cela, il a accès à une base d'images d'origine 72, et il peut programmer le dispositif 2 pour produire pour chaque image de la base 72 un nombre désiré d'images synthétisées stockées dans une base d'images synthétisées 74.

Cette production peut être réalisée en appliquant de manière aléatoire ou systématique un certain nombre des règles de la base 10, et en faisant varier de manière aléatoire ou systématique les paramètres de ces règles.

L'interface GUI permet également à l'utilisateur de créer des images synthétisées présentant des caractéristiques particulières, par exemple en imposant la présence d'une coupure de l'image originale à un endroit précis d'une image synthétisée.

Pour cela, le dispositif 2 calcule deux images synthétisées, l'une partant du bord gauche de l'image et s'arrêtant à la coupure concernée, et l'autre image partant de la coupure concernée et s'arrêtant au bord droit de l'image. Bien sûr cela peut être répété en imposant plusieurs coupures à plusieurs endroits cibles.

En variante, l'utilisateur peut également imposer la reproduction d'une partie cible de l'image originale dans une zone cible de l'image synthétisée. Cela permet d'utiliser un "glisser-déposer" d'une partie de l'image originale, ce qui simplifie l'expérience utilisateur. Pour cela, le dispositif 2 peut notamment appliquer la cinquième règle.

Dans ce qui précède, les deuxième, troisième, quatrième et cinquième règles ont été décrites pour améliorer la qualité de la synthèse d'image. Pour cela, ces règles limitent les coupures qui peuvent être utilisées dans l'algorithme de Dijkstra. Elles ont été définies à partir d'un noeud qui a d'abord été ajouté, puis qui est retiré en fonction de ces règles.

Cela signifie que la fonction Select() qui les met en oeuvre fonctionne d'abord comme décrit en rapport avec la première règle, puis exécute un deuxième passage sur la liste Nxt pour retirer les noeuds qui ont été ajoutés et ne satisfont pas les deuxième et/ou troisième et/ou quatrième et/ou cinquième règles.

En variante, la fonction Select() pourrait être prévue pour mettre en oeuvre toutes les première à cinquième règles en une seule passe, c'est-à-dire qu'un noeud n'est ajouté à la liste Nxt que s'il satisfait à toutes les règles, par des tests a priori.

Pour finir, il apparaît que l'on peut stocker les images synthétisées sous deux formats équivalents.

Selon un premier format, l'image originale et la liste des coupures sont fournies, et les images synthétisées sont constituées par la liste des coupures qui les composent.

Lorsqu'elles doivent être utilisées, les images synthétisées sont construites en collant bout à bout les morceaux de l'image originale situés entre chaque paire de coupures de la liste de coupures.

Cela est particulièrement avantageux car la liste de coupures contient seulement un identifiant de coupures, et un identifiant de l'image originale. Ainsi, lorsqu'il y a beaucoup d'images synthétisées, ce format occupe très peu d'espace de stockage par rapport au stockage d'images brutes.

Il est également possible de déterminer très rapidement la couleur d'un point situé aux coordonnées (x,y) de l'image synthétisée à partir de la liste de coupures. On effectue pour cela une recherche dichotomique sur la liste des coupures qui sont triées par ordre croissant de position (les coupures formant une image synthétisée ne se croisent jamais).

Ceci permet d'afficher les images à l'écran ou appliquées sur des objets tridimensionnels par placage de texture sans jamais avoir à explicitement former l'image synthétisée en mémoire.

Selon un deuxième format, les images synthétisées sont directement stockées sous forme d'images, c'est-à-dire qu'après que la liste de coupures a été établie, l'image synthétisée correspondante est générée et stockée.

Ce format peut être utile lorsque la puissance de calcul est limitée, et empêche une génération à la volée des images synthétisées à partir de leurs listes de coupures respectives.

L'approche qui a été décrite ci-dessus peut être directement appliquée même sur des données de vidéo et des volumes (en fait des images 3D).

L'approche s'applique également à des signaux 1 D tels que des sons, auquel cas les coupures se réduisent à une seule coordonnée et le coût de correspondance peut être donné, par exemple, par une matrice de similarité.

Les chemins deviennent alors des nappes qui séparent le volume en deux selon une direction, mais le reste du fonctionnement est globalement inchangé.

Dans ce cas, il peut être intéressant d'étendre l'algorithme décrit aux figures 4 et 6 pour tenir compte du nombre de dimension des nappes, en répétant les opérations selon chacune de ces dimensions.

D'une manière plus générale, il est possible d'étendre l'algorithme de la figure 6 à un nombre quelconque de directions.

## Revendications

1. Dispositif de traitement d'image, **caractérisé en ce qu'**il comprend :
- un analyseur (4) capable de calculer, à partir de données d'image, des données de coupure et des données de différence associées, les données de coupure comprenant des coordonnées de l'image et désignant une paire de chemins parallèles dans l'image, et les données de différence étant représentatives d'une différence entre des attributs des données d'image le long de chaque paire de chemins parallèles,
- un sélectionneur (6) recevant en entrée des données d'un noeud de travail et des données de coupure, et agencé pour en tirer des données de noeuds dits successeurs sur la base d'une règle de sélection, les données d'un noeud comprenant des données de coupure, des données de coût, et des données de position,
- un assembleur (8) recevant en entrée des données de noeuds de travail et des données d'un noeud prédécesseur, et capable de calculer des données de noeuds mis à jour, en fonction des données de coût de certains au moins des noeuds de travail, de celles du noeud prédécesseur, et des données de différence associées aux données de coupure des noeud de travail,
- un pilote (11) agencé pour :
* appeler l'analyseur (4) avec des données d'image d'une image en entrée,
* appeler le sélectionneur (6) avec un noeud d'entrée comme noeud de travail et avec les données de coupure calculées par l'analyseur (4),
* appeler l'assembleur (8) avec certains au moins des noeuds successeurs déterminés par le sélectionneur (6) comme noeuds de travail, et avec le noeud d'entrée comme noeud prédécesseur, et
* appeler répétitivement le sélectionneur (6) et l'assembleur (8), en utilisant un des noeuds mis à jour comme noeud de travail pour le sélectionneur (6), en utilisant les noeuds successeurs résultants de cet appel comme noeuds de travail et le noeud mis à jour comme noeud prédécesseur pour l'assembleur (8), jusqu'à ce qu'une condition portant sur les données de coupure et les données de position d'un noeud mis à jour soit remplie.

2. Dispositif selon la revendication 1, dans lequel les données de noeud comprennent également des données de prédécesseur, et dans lequel l'assembleur (8) est agencé pour mettre à jour les données de coût d'un noeud de travail donné lorsque les données de coût du noeud de travail donné définissent une valeur supérieure à la somme de la valeur définie par les données de coût du noeud prédécesseur ajoutée de la valeur définie par les données de différence associant le noeud de travail donné et le noeud prédécesseur.

3. Dispositif selon la revendication 2, dans lequel lors de l'appel répété du sélectionneur et de l'assembleur, le noeud mis à jour utilisé est celui présentant les données de coût désignant le coût le plus faible.

4. Dispositif selon la revendication 3, dans lequel la règle de sélection comprend la sélection d'un noeud successeur dont les données de coupure désignent le chemin qui forme une paire avec le chemin désigné par les données de coupure du noeud de travail, et dont les données de position sont identiques à celles du noeud de travail.

5. Dispositif selon la revendication 4, dans lequel la règle de sélection comprend en outre la sélection d'au moins un noeud successeur dont les données de coupure désignent un chemin parmi l'ensemble des chemins frontaux du chemin désigné par les données de coupure du noeud de travail,
un chemin étant dit frontal du chemin désigné s'il ne coupe pas le chemin désigné et s'il n'existe aucun autre chemin qui est intégralement situé entre lui et le chemin désigné.

6. Dispositif selon la revendication 4 ou 5, dans lequel la règle de sélection exclut la sélection d'un noeud successeur comprenant des données de coupure associées à une partie de l'image qui est déjà associée à des données de coupure d'un noeud désigné directement ou indirectement par les données de prédécesseur du noeud de travail donné lorsque les données de position respectives de ces noeuds indiquent une différence de position inférieure à un seuil choisi.

7. Dispositif selon la revendication 6, dans lequel, pour appliquer la règle de sélection, l'assembleur (8) maintient un tableau contenant des données d'occurrences de colonnes de l'image en fonction des données de position et des données de coupure et des données de prédécesseur associées à un noeud de travail donné.

8. Dispositif selon l'une des revendications précédentes, dans lequel les données de coupure sont associées à une direction parmi deux directions non parallèles dans l'image, et dans lequel le pilote (11) est agencé pour opérer d'abord avec les données de coupure associées à une première des deux directions jusqu'à que la condition portant sur les données de coupure et les données de position d'un noeud mis à jour soit remplie, puis pour opérer avec les données de coupure associées à une deuxième des deux directions jusqu'à ce qu'une deuxième condition portant sur les données de coupure et les données de position d'un noeud mis à jour soit remplie.

9. Dispositif selon la revendication 8, dans lequel le pilote (11) appelle l'assembleur (8) après que la condition portant sur les données de coupure et les données de position d'un noeud mis à jour soit remplie, pour appliquer aux données de coupure associées à la deuxième direction une transformation tirée des données de coupure associées au dernier noeud mis à jour et aux noeuds désignés par ses données de prédécesseur.

10. Dispositif selon l'une des revendications précédentes, dans lequel la paire de chemins parallèles dans l'image est déterminée par des étapes comprenant : un calcul d'une image de différence définie par des données issues de la différence entre des attributs des données d'images et des attributs issus d'une translation opérée sur lesdites données d'image, suivi d'une détermination d'un chemin dans l'image de différence, un premier chemin de la paire de chemins parallèles ayant les mêmes coordonnées que ledit chemin dans l'image de différence, un deuxième chemin de la paire de chemins parallèles étant décalé par rapport au premier chemin d'une translation opposée à ladite translation opérée.

11. Procédé de traitement d'image comprenant, pour une image reçue en entrée :
a. le calcul de données de coupure et de données de différence associées, les données de coupure comprenant des coordonnées de l'image et désignant une paire de chemins parallèles dans l'image, et les données de différence étant représentatives d'une différence entre des attributs des données d'image le long de chaque paire de chemins parallèles,
b. la sélection, à partir de données d'un noeud d'entrée et des données de coupure issues de l'étape a., de données de noeuds dits successeurs sur la base d'une règle de sélection, les données d'un noeud comprenant des données de coupure, des données de coût, et des données de position,
c. la mise à jour, à partir des données de noeuds successeurs de l'étape b. et des données du noeud d'entrée, des données de noeud successeurs, en fonction des données de coût de certains au moins des noeuds successeurs, de celles du noeud d'entrée, et des données de différence associées aux données de coupure des noeuds successeurs,
d. la répétition des étapes b. et c., avec un des noeuds mis à jour comme entrée pour l'étape b., et avec les noeuds successeurs résultants et ce noeud mis à jour comme entrées pour l'étape c., jusqu'à ce qu'une condition portant sur les données de coupure et les données de position d'un noeud mis à jour soit remplie.

## Patentansprüche

1. Vorrichtung zur Bildverarbeitung, dadurch charakterisiert, dass es aufweist:
- eine Analysiereinrichtung (4), geeignet zum Berechnen, ausgehend von Bilddaten, von Schneidedaten und zugeordneten Differenzdaten, wobei die Schneidedaten Koordinaten des Bildes aufweisen und ein Paar von parallelen Wegen in dem Bild angeben und die Differenzdaten einen Unterschied zwischen Attributdaten entlang jedes Paars von parallelen Wegen repräsentieren,
- einen Auswähleinrichtung (6), die eingangsseitig Daten von einem Arbeitsknoten und Schneidedaten empfängt und eingerichtet ist, daraus Daten sogenannter Folgeknoten auf der Basis einer Auswahlregel zu gewinnen, wobei die Daten eines Knotens Schneidedaten, Kostendaten und Positionsdaten aufweisen,
- eine Zusammenfügeeinrichtung (8), die eingangsseitig Arbeitsknotendaten und Daten eines Vorgängerknotens empfängt und geeignet ist, Daten von aktualisierten Knoten als Funktion der Kostendaten von mindestens gewissen der Arbeitsknoten, denjenigen des Vorgängerknotens und den Differenzdaten, die den Schneidedaten der Arbeitsknoten zugeordnet sind, zu berechnen,
- eine Steuereinrichtung (11), eingerichtet zum:
*Aufrufen der Analysiereinrichtung (4) mit Bilddaten eines Eingangsbildes
*Aufrufen der Auswähleinrichtung (6) mit einem Eingangsknoten als Arbeitsknoten und mit den von der Analysiereinrichtung (4) berechneten Schneidedaten,
*Aufrufen der Zusammenfügeeinrichtung (8) mit mindestens gewissen der durch die Auswähleinrichtung (6) ermittelten Folgeknoten als Arbeitsknoten und mit dem Eingangsknoten als Vorgängerknoten und
*wiederholtes Aufrufen der Auswähleinrichtung (6) und der Zusammenfügeeinrichtung (8) unter Verwendung eines der aktualisierten Knotens als Arbeitsknoten für die Auswähleinrichtung (6), unter Verwendung der Nachfolgeknoten, die aus diesem Aufruf hervorgehen, als Arbeitsknoten und des aktualisierten Knotens als Vorgängerknoten für die Zusammenfügeeinrichtung (8) bis eine Bedingung, die die Schneidedaten und die Positionsdaten eines aktualisierten Knotens betrifft, erfüllt ist.

2. Vorrichtung gemäß Anspruch 1, in der die Knotendaten auch die Vorgängerdaten enthalten und in der die Zusammenfügeeinrichtung (8) eingerichtet ist, die Schneidedaten eines gegebenen Arbeitsknotens zu aktualisieren, wenn die Kostendaten des gegebenen Arbeitsknotens einen Wert definieren, der höher ist als die Summe aus dem Werts, der durch die Kostendaten des Vorgängerknotens definiert ist, und dem Wert, der durch die Differenzdaten definiert ist, die den gegebenen Arbeitsknoten und den Vorgängerknoten einander zuordnen, ist.

3. Vorrichtung gemäß Anspruch 2, in dem im Falle eines wiederholten Aufrufs der Auswähleinrichtung der verwendete aktualisierte Knoten der ist, der Kostendaten hat, die die geringsten Kosten angeben.

4. Vorrichtung gemäß Anspruch 3, in dem die Auswahlregel die Auswahl eines Vorgängerknotens aufweist, dessen Schneidedaten den Weg angeben, der ein Paar mit dem Weg bildet, der von den Schneidedaten des Arbeitsknotens angegeben wird, und dessen Positionsdaten identisch mit denen des Arbeitsknotens sind.

5. Vorrichtung gemäß Anspruch 4, in der die Auswählregel außerdem die Auswahl von mindestens einem Folgeknoten aufweist, dessen Schneidedaten einen Weg aus der Menge von Wegen, die frontal sind zu dem Weg, der durch die Schneidedaten des Arbeitsknotens angegeben wird, angibt, wobei ein Weg frontal zu dem angegebenen Weg genannt wird, falls er den angegebenen Weg nicht schneidet und falls kein anderer Weg existiert, der vollständig zwischen ihm und dem angegebenen Weg liegt.

6. Vorrichtung gemäß Anspruch 4 oder 5, in dem die Auswählregel die Auswahl eines Vorgängerknotens ausschließt, der Schneidedaten aufweist, die einem Teil des Bildes zugeordnet sind, der schon den Schneidedaten eines Knotens zugeordnet ist, der direkt oder indirekt von den Vorgängerdaten des gegebenen Arbeitsknotens angegeben wird, wenn die jeweiligen Positionsdaten dieser Knoten einen Positionsunterschied anzeigen, der unter einem gewählten Schwellwert liegt.

7. Vorrichtung gemäß Anspruch 6 in dem die Zusammenfügeeinrichtung (8) zum Anwenden der Auswählregel eine Tabelle bereithält, die Daten über das Auftreten der Spalten des Bildes als Funktion der Positionsdaten und der Schneidedaten und der Vorgängerdaten, die einem vorgegebenen Arbeitsknoten zugeordnet sind, enthält.

8. Vorrichtung gemäß einem der vorhergehenden Ansprüche, in dem die Schneidedaten einer Richtung von zwei nicht-parallelen Richtungen in dem Bild zugeordnet sind und in dem die Steuereinrichtung (11) eingerichtet ist, zuerst mit den Schneidedaten zu arbeiten, die einer ersten der zwei Richtungen zugeordnet sind, bis die Bedingung, die die Schneidedaten und die Positionsdaten eines aktualisierten Knotens betrifft, erfüllt ist, und danach mit den Schneidedaten zu arbeiten, die einer zweiten der zwei Richtungen zugeordnet sind, bis eine Bedingung, die die Schneidedaten und die Positionsdaten eines aktualisierten Knotens betrifft, erfüllt ist.

9. Vorrichtung gemäß einem der vorhergehenden Ansprüche, in dem die Steuereinrichtung (11) die Zusammenfügeeinrichtung (8) aufruft nachdem die Bedingung, die die Schneidedaten und die Positionsdaten eines aktualisierten Knotens betrifft, erfüllt ist, um eine Transformation auf die Schneidedaten, die der zweiten Richtung zugeordnet sind, anzuwenden, die aus den Schneidedaten, die dem letzten aktualisierten Knoten und den von seinen Vorgängerdaten angegebenen Knoten zugeordnet sind, abgeleitet ist.

10. Vorrichtung gemäß einem der vorhergehenden Ansprüche, in dem das Paar aus parallelen Wegen in dem Bild durch Schritte ermittelt wird, die aufweisen: Eine Berechnung eines Differenzbildes, definiert durch Daten, die aus dem Unterschied hervorgehen zwischen den Attributen der Bilddaten und Attributen, die aus einer auf die Bilddaten angewendeten Translation hervorgehen, gefolgt von einer Ermittlung eines Wegs in dem Differenzbild, wobei ein erster Weg des Paars von parallelen Wegen dieselben Koordinaten wie der Weg im Differenzbild hat und ein zweiter Weg des Paars von parallelen Wegen bezüglich des ersten Wegs durch eine Translation verschoben ist, die der angewendeten Translation entgegengesetzt ist.

11. Verfahren zur Bildverarbeitung, aufweisend, für ein eingangsseitig empfangenes Bild:
a. das Berechnen von Schneidedaten und zugeordneten Differenzdaten, wobei die Schneidedaten Koordinaten des Bildes aufweisen und ein Paar von parallelen Wegen in dem Bild angeben und die Differenzdaten einen Unterschied zwischen Attributdaten entlang jedes Paars von parallelen Wegen repräsentieren,
b. die Auswahl, ausgehend von den Daten eines Eingangsknotens und den aus Schritt a. hervorgehenden Schneidedaten von Daten sogenannter Folgeknoten auf der Basis einer Auswahlregel, wobei die Daten eines Knotens Schneidedaten, Kostendaten und Positionsdaten aufweisen,
c. das Aktualisieren, ausgehend von den Daten des Vorgängerknotens aus Schritt b. und den Daten des Eingangsknotens, der Daten der Folgeknoten als Funktion der Kostendaten von mindestens gewissen der Arbeitsknoten, derjenigen des Eingangsknotens und den Differenzdaten, die den Schneidedaten der Folgeknoten zugeordnet sind,
d. die Wiederholung der Schritte b. und c. mit einem der der aktualisierten Knoten also Eingabe für den Schritt b. und mit den Nachfolgeknoten, die aus diesem aktualisierten Knoten hervorgehen, als Eingabe für den Schritt c. bis eine Bedingung, die die Schneidedaten und die Positionsdaten eines aktualisierten Knotens betrifft, erfüllt ist.

## Claims

1. An image processing device, **characterized in that** it includes:
- an analyzer (4) capable of calculating associated cutting data and difference data from image data, the cutting data comprising coordinates of the image and designating a pair of parallel paths in the image, and the difference data representing a difference between attributes of the image data along each pair of parallel paths,
- a selector (6) receiving input data from a working node and cutting data and configured to obtain therefrom so-called successor node data on the basis of a selection rule, the data of a node including cutting data, cost data, and position data,
- an assembler (8) receiving input data from working nodes and data from a predecessor node and capable of calculating updated node data as a function of the cost data on at least some of the working nodes, the cost data of the predecessor node and the difference data associated with the cutting data of the working nodes,
- a driver (11) configured to:
* call the analyzer (4) with image data of an input image,
* call the selector (6) with an input node as the working node and with the cutting data calculated by the analyzer (4),
* call the assembler (8) with at least some of the successor nodes determined by the selector (6) as working nodes and with the input node as a predecessor node, and
* repeatedly call the selector (6) and the assembler (8) using one of the updated nodes as a working node for the selector (6), using the successor nodes resulting from said call as working nodes and the updated node as a predecessor node for the assembler (8), until a condition relating to the cutting data and the position data of an updated node is satisfied.

2. The device according to claim 1, wherein the node data also comprises predecessor data, and wherein the assembler (8) is arranged to update the cost data of a given working node when the cost data of the given working node defines a value higher than the sum of the value defined by the cost data of the predecessor node added to the value defined by the difference data associating the given working node and the predecessor node.

3. The device according to claim 2, wherein upon the repeated call from the selector and the assembler, the updated node used is that having the cost data designating the lowest cost.

4. The device according to claim 3, wherein the selection rule comprises selecting a successor node whereof the cutting data designates the path that forms a pair with the path designated by the cutting data of the working node, and whereof the position data is identical to that of the working node.

5. The device according to claim 4, wherein the selection rule also comprises selecting at least one successor node whereof the cutting data designates a path from among the set of frontal paths of the path designated by the cutting data of the working node, a path being called a frontal path of the designated path if said path does not intersect the designated path and if it does not exist any other path integrally located between said path and said designated path..

6. The device according to claim 4 or 5, wherein the selection rule excludes selecting a successor node comprising cutting data associated with part of the image that is already associated with cutting data of a node directly or indirectly designated by the predecessor data of the given working node when the respective position data of those nodes indicates a position difference below a selected threshold.

7. The device according to claim 6, wherein, to apply the selection rule, the assembler (8) maintains a table containing occurrence data for columns of the image as a function of the position data and cutting data and predecessor data associated with a given working node.

8. The device according to one of the preceding claims, wherein the cutting data is associated with one direction from among two non-parallel directions in the image, and wherein the driver (11) is arranged first to operate with the cutting data associated with a first of the two directions until the condition relating to the cutting data and the position data of an updated node are met, then to operate with the cutting data associated with a second of the two directions until a second condition relating to the cutting data and the position data of an updated node are met.

9. The device according to claim 8, wherein the driver (11) calls the assembler (8) after the condition relating to the cutting data and the position data of an updated node is met, to apply a transformation, to the cutting data associated with the second direction, drawn from the cutting data associated with the last updated node and the nodes designated by its predecessor data.

10. The device according to anyone of the preceding claims, wherein the pair of parallel paths in the image is determined by steps including: a calculation of a difference image defined by data obtained from the difference between image data attributes and attributes obtained from a translation operated on said image data, followed by a determination of a path in the difference image, a first path of the pair of parallel paths having the same coordinates than said path in the difference image, a second path in the pair of parallel path being shifted, with regard to the first path, by a translation opposite from said operated translation.

11. An image processing method comprising, for an input image:
a. calculating cutting data and associated difference data, the cutting data comprising coordinates for the image and designating a pair of parallel paths in the image, and the difference data representing a difference between attributes of the image data along each pair of parallel paths,
b. selecting, from data of an input node and cutting data resulting from step a., data for so-called successor nodes based on a selection rule, the data of a node comprising cutting data, cost data, and position data,
c. updating, from the successor node data of step b. and data from the input node, successor node data as a function of the cost data of at least some of the successor nodes, that of the input node, and difference data associated with the cutting data of the successor nodes,
d. repeating steps b. and c., with one of the updated nodes as input for step b., and with the resulting successor nodes and that updated node as inputs for step c., until a condition relating to the cutting data and the position data of an updated node are met.
